Europäisches Patentamt

European Patent Office        (11) Publication number:    **0 049 452**

Office européen des brevets                              **B1**

(12)                 **EUROPEAN PATENT SPECIFICATION**

(45) Date of publication of patent specification: **08.05.85**        (51) Int. Cl.⁴: **C 08 L 75/04, B 32 B 27/40,**
                                                                        **C 08 G 18/14, C 08 J 9/30,**
(21) Application number: **81107698.3**                                    **D 06 N 3/14, D 06 N 7/00**

(22) Date of filing: **28.09.81**

(54) **A polyurethane composition for providing a unitary backing for tufted or woven carpets and a carpet containing the polyurethane composition as a unitary backing.**

(30) Priority: **29.09.80 US 191590**

(43) Date of publication of application:
**14.04.82 Bulletin 82/15**

(45) Publication of the grant of the patent:
**08.05.85 Bulletin 85/19**

(84) Designated Contracting States:
**BE DE FR GB IT NL**

(56) References cited:
**DE-A-2 748 085**
**GB-A-1 383 921**

(73) Proprietor: **THE DOW CHEMICAL COMPANY**
**Dow Center 2030 Abbott Road Post Office Box 1967**
**Midland Michigan 48640 (US)**

(72) Inventor: **Jenkines, Randall Craig**
**204 Crocus City of Lake Jackson**
**Brazoria, Texas 77566 (US)**
Inventor: **Taylor, Clyde Gene**
**208 Live Oak Lane City of Lake Jackson**
**Brazoria, Texas 77566 (US)**
Inventor: **Turner, Robert Burton**
**328 Huckleberry City of Lake Jackson**
**Brazoria, Texas 77566 (US)**
Inventor: **Ridgway, Donald Harold**
**312 Narcissus City of Lake Jackson**
**Brazoria, Texas 77566 (US)**

(74) Representative: **Weickmann, Heinrich, Dipl.-Ing. et al**
**Patentanwälte Dipl.-Ing. H.Weickmann Dipl.-Phys. Dr. K. Fincke Dipl.-Ing. F. A. Weickmann Dipl.-Chem. B. Huber Dr.-Ing. H. Liska Dipl.-Phys. Dr. J. Prechtel Postfach 860820 D-8000 München 86 (DE)**

Courier Press, Leamington Spa, England.

**Description**

The majority of carpets or upholstery goods are made by tufting or weaving yarn into a primary backing, such as a woven or nonwoven textile base. The pile loops or tufts are not securely fastened in the tufting or weaving process and can be easily pulled from the primary backing. Necessary anchorage is provided by applying a free flowing adhesive material to the backside of the carpet. This anchorage is commonly referred to as tuft lock. Another important physical property of carpet is dimensional stability. Carpets or upholstery goods having good dimensional stability do not tend to creep and buckle under normal use. Currently, the carpet industry achieves dimensional stability with the use of a secondary backing. Common secondary backings being used in the industry include both natural and synthetic woven or non-woven fabrics. Jute is a common example of a natural woven secondary backing. Synthetic secondary backings are typically made from polypropylene and can be either woven or non-woven. The backings are laminated to the backside of the carpet with latex based adhesives. Carpets or upholstery goods having a secondary backing are used principally on residential carpeting. Without this additional secondary backing material applied to the adhesive material on the backside of the carpet, the carpet is said to have a unitary backing. Carpets having a unitary backing are used principally in commercial applications. The majority of commercial carpeting is installed directly on the floor using water based adhesives. The basic requirements for commercial carpeting are that they have good tuft lock and can be easily installed with water based latex adhesives. The major problems associated with installation is a curling phenomenon occurring at the peripheral edges of the carpet known as edge curl. Tuft lock performance and edge curl are interrelated. Commercial carpeting backed with urethane compositions and possessing good tuft lock normally has severe edge curl problems. Likewise, carpeting having acceptable edge curling properties is deficient in tuft lock. Commercial carpeting exhibiting severe edge curl must be installed with expensive adhesives.

The current polyurethane unitary carpet backing systems known in the art all possess good dimensional stability, bundle wrap and pilling and fuzzing characteristics. However, they do not possess adequate tuft lock performance with acceptable edge curl characteristics.

The present invention not only provides carpeting with good dimensional stability, bundle wrap and pilling and fuzzing characteristics but adequate and often much improved tuft lock performance with acceptable edge curling properties. Adequate tuft lock performance is characterized by having a force greater than 12 pounds (54 Newtons) necessary to pull one tuft out of the carpet. Acceptable edge curl performance is characterized by a curl of not greater than 4.1 centimeters.

The present invention is directed to a polyurethane composition for providing a unitary backing for tufted carpets which is the reaction product of a polyurethane forming mixture comprising:

(A) a polyether polyol having an average of from 2 to 8, preferably from 2 to 3, hydroxyl groups per molecule and an average hydroxyl equivalent weight of from 500 to 2200, preferably from 600 to 2000;

(B) a polyol having an average of from 2 to 8, preferably from 2 to 3, hydroxyl groups per molecule and an average equivalent weight of from 31 to 230, preferably from 31 to 200;

(C) an organic polyisocyanate or polyisothiocyanate having an average of from 2 to 4 NCX groups per molecule, each X being independently oxygen or sulfur;

(D) an inorganic filler; and

(E) a catalyst for reacting components (A) and (B) with component (C); characterized in that components (A), (B), (C), (D) and (E) are present in such quantities that the time required for the catalyzed, filled, unfrothed polyurethane forming mixture to reach a Brookfield viscosity of 20,000 centipoise (20 Pascal-seconds) employing a number 3 spindle rotating at 6 rpm is at least 70 seconds measured from the time the catalyst is added to a mixture of the other components when the temperature of the uncatalyzed mixture is between 92°F and 94°F (33°C and 34°C).

The present invention is also directed to a carpet comprising a primary backing; a yarn tufted or woven through said primary backing thereby creating a yarn bundle on the underside of the resultant tufted or woven greige good and a polyurethane composition applied to the underside thereby encapsulating the yarn bundles and adhering the yarn bundles to the primary backing; characterized in that the polyurethane composition is the composition hereinbefore described.

Suitable polyether polyols which can be employed in the present invention as component (A) include adducts of one or more compounds containing 2 to 8 hydroxyl groups per molecule and one or more hydrocarbylene or halogen substituted hydrocarbylene oxides.

Suitable hydroxyl containing compounds include those having from 2 to 20, preferably from 2 to 6 carbon atoms such as, for example, ethylene glycol, diethylene glycol, propylene glycol, 1,2-butane diol, 1,3-butane diol, 1,4-butane diol, glycerine, trimethylol propane, p,p'-isopropylidine diphenol, and mixtures thereof.

Suitable hydrocarbylene or halogen substituted hydrocarbylene oxides which can be employed to prepare polyether polyols include those having from 2 to 12, preferably from 2 to 4 carbon atoms such as, for example, ethylene oxide, propylene oxide, 1,2-butylene oxide, 2,3-butylene oxide, styrene oxide, epichlorohydrin, epibromohydrin, 3-methyl-1,2-butylene oxide, 3,3-dimethyl-1,2-butylene oxide, and mixtures thereof.

Other polyether polyols which can be employed herein include polymer-containing polyols such as, for

2

example, those disclosed in U.S. Patents RE 29,118 (Stamberger), RE 28,715 (Stamberger), RE 29,014 (Pizzini et al.) and 3,869,413 (Blankenship et al.).

Suitable polyols which can be employed in the present invention as component (B) include, for example, ethylene glycol, propylene glycol, 1,3-propane diol, 1,4-butane diol, dipropylene glycol, diethylene glycol, triethylene glycol, tetraethylene glycol, tripropylene glycol, tetrapropylene glycol, heptapropylene glycol, and mixtures thereof.

Also suitable as low hydroxyl equivalent weight polyols are adducts of initiator compounds having from 2 to 8 active hydrogen atoms per molecule and a hydrocarbylene oxide as hereinbefore described so long as the resultant adduct has the desired hydroxyl equivalent weight.

Particularly suitable initiator compounds include, for example, water, ethylene glycol, propylene glycol, glycerine, trimethylol propane, aniline, ammonia, ethylene diamine, diethylenetriamine, aminoethylethanolamine, pentaerythritol, glucose, fructose, sucrose, sorbitol, and mixtures thereof.

When adducts of initiator compounds having more than 8 active hydrogen atoms per molecule are employed, they must be employed in admixture with polyols having less than 8 hydroxyl groups per molecule in quantities so as to result in an average of from 2 to 8 hydroxyl groups per molecule.

Suitable organic polyisocyanates, component (C) include, for example, 2,4-toluenediisocyanate, 2,6-toluenediisocyanate, xylylenediisocyanate, p,p'-diphenylmethanediisoecyanate, p-phenylenediisocyanate, naphthalenediisocyanate, dianisodine diisocyanate, polymethylene polyphenylisocyanate, hexamethylene diisocyanate, and mixtures thereof.

Also suitable are the isocyanate terminated prepolymers prepared from one or more of the above mentioned polyisocyanates and one or more ofthe above mentioned polyols.

Suitable also are the trimerized diisocyanates and crude diisocyanates.

Also suitable are the corresponding polyisothiocyanates, including isothiocyanate terminated prepolymers.

Suitable catalysts, component (E), which can be employed include, for example, tertiary amines, organometallic compounds, particularly metal carboxylates, and mixtures thereof.

Particularly suitable catalysts include, for example, di-n-butyl tin-bis(mercaptoacetic acid isooctyl ester), dimethyl tin dilaurate, dibutyl tin dilaurate, stannous octoate, lead octoate, triethylene diamine, N-methyl morpholine, and mixtures thereof.

Suitable inorganic filler materials, component (D), which can be employed herein include, for example, calcium carbonate, alumina trihydrate, talc, bentonite, antimony trioxide, kaolin, barytes either as obtained or treated with fatty acids or organotitanates, and mixtures thereof. Advantageously, the inorganic filler is present in quantities of from 50 parts to 300 parts, probably from 60 parts to 250 parts, per 100 parts by weight of liquid reactants.

If desired, the formulations can contain flame suppressing agents such as, for example, dibromoneopentyl glycol, tris(dichloropropyl) phosphate, polyammonium phosphate, beta-chloroethyl phosphonate ester, chlorophosphate ester, polymers and copolymers of vinyl chloride and vinylidene chloride, and mixtures thereof.

The polyurethane backing can be either foamed or unfoamed. In those instances where foaming is desired, such can be accomplished by using the inert gas frothing technique or the volatile liquid blowing agent technique or combinations thereof in conjunction with a surfactive agent such as the commercially available block polysiloxane-polyoxyalkylene copolymers.

Suitable primary backing materials which can be employed in the present invention include those prepared from, for example, jute, polypropylene, nylon, polyesters and polyacrylates.

Suitable yarns which can be tufted into the primary backing include those prepared from, for example, wool, nylon, polyester, acrylic, cotton, polypropylene, polyethylene and blends thereof.

The relative proportions of components (A), (B), (C), (D) and (E) affect the time required for the polyurethane forming mixture to reach a Brookfield viscosity of 20,000 centipoise (20 Pascal-seconds) when employing a number 3 spindle rotating at 6 rpm. When the proportions of these five components are such that the time required is greater than 70 seconds measured from the time the catalyst is added to the mixture of the other four components when the temperature of the uncatalyzed mixture is between 92°F and 94°F (33°C and 34°C), then a tufted carpet containing a unitary backing of that polyurethane composition has a tuft lock value of at least 12 pounds (53 Newtons) and an edge curl value of not greater than 4.1 centimeters.

Advantageously, components (A), (B) and (C) are employed in such quantities that the NCX:OH ratio ranges from 0.95:1 to 1.5:1. It has been found that the particular ratio of the number of equivalents of hydroxyl groups of components (A) and (B) determines the optimum NCX:OH ratio. Preferably, the ratio of hydroxyl equivalents of (B):(A) is from 0.8:1 to 5.5:1, more preferably 0.8:1 to 4:1. For example, at a ratio of (B):(A) of 0.8:1, the NCX:OH ratio ranges from 1.21:1 to 1.5:1, whereas at a ratio of 2.66:1, the suitable NCX:OH ratio ranges from 1.03:1 to 1.5:1. At a (B):(A) ratio of 4.33:1, the suitable NCX:OH ratio ranges from 0.95:1 to 1.25:1.

The present invention not only provides carpeting with good dimensional stability, bundle wrap and pilling and fuzzing characteristics but adequate and much improved tuft lock performance with acceptable edge curing properties. The amount of bundle wrap or penetration of the catalyzed composition into the fibers is one important parameter which gives the carpet these excellent properties. The amount of bundle wrap or penetration into the carpet fibers is controlled mainly by adjusting the time to reach proper viscosity. If the time to reach proper viscosity is too fast, then the penetration of the composition into the carpet fibers is greatly reduced. This reduction in penetration yields a carpet which lacks the desired tuft lock and pilling and fuzzing characteristics. The time to reach a proper viscosity is controlled through the use of the proper proportions of components (A), (B), (C), (D) and (E). For example, if fast reacting polyols are employed, then the catalyst amount must be adjusted to give the proper time-viscosity relationship for the reacting composition.

When the equivalent weight of component (A) is about 500, an NCX:OH ratio of greater than 1.25:1 results in an edge curl value greater than 4.1 centimeters; whereas when the equivalent weight of component (A) is about 2200, an NCX:OH ratio of less than 1.42:1 results in a tuft lock value below 12 pounds (53 Newtons).

When component (B) is employed at an equivalent weight of about 31, an NCX:OH ratio above 1.24:1 results in an edge curl value greater than 4.1 centimeters and when component (B) is employed at an equivalent weight of about 230 an NCX:OH ratio below 1.25:1, a tuft lock value of less than 12 pounds (53 Newtons) is obtained.

The polyurethane-forming froth is obtained by mechanically inducing an inert gas into the foam-forming composition. This is readily accomplished by a mixer such as a hand kitchen mixer fitted with a blade designed to mechanically whip or blend air or the inert gas into the mixture of urethane-forming components such as the type of blade employed in preparing whipped cream or for preparing meringue from egg whites or the like. Another method, which is more readily adaptable to large scale production is by feeding a stream composed of a mixture of the urethane-forming components or separate streams of the urethane-forming components and a stream of air or other inert gas into a suitable froth generator-mixer such as, for example, an Oakes foamer whereupon the frothed composition which emerges from the froth generator-mixer is directed onto the underside of the tufted or woven primary backing whereupon the froth composition thermosets into a flexible polyurethane foam.

Still another method is to feed the inert gas and all of the urethane-forming components except for the catalyst into the froth generator-mixer and subsequently mixing the catalyst with the resultant froth in a suitable mixer such as a static mixer and then directing the resultant catalyst-containing froth onto the underside of the tufted primary backing.

Suitable inert gaseous substances which are employed in the present invention include any gaseous element, compound, or mixture thereof which exist in the gaseous state under standard conditions of temperature and pressure i.e. 25°C and 1 atmosphere (0.1 MPa), including for example, xenon, helium, carbon dioxide, nitrogen, oxygen, propane, methane, ethane or mixtures thereof such as, for example, air, provided such does not react with any of the urethane forming components.

For purposes of determining the tuft lock for the present invention, values must be determined on unfoamed or unfrothed compositions employing the particular greige good employed in Example 1 because when the urethane composition is frothed, the tuft lock values are reduced somewhat and for those having tuft lock values in an unfrothed formulation of just above about 12 pounds (53 Newtons) then the same formulation in a frothed condition would result in tuft lock values below about 12 pounds (53 Newtons); but nevertheless such are still within the purview of the present invention. Also, for the same urethane formulation employed on a different greige good, the tuft lock values can fall below about 12 pounds (53 Newtons). Nevertheless, the urethane compositions claimed and described herein provide the optimum values for tuft lock for any greige good although some of the particular greige goods would result in tuft lock values below about 12 pounds (53 Newtons) with a formulation which results in a tuft lock value above about 12 pounds (53 Newtons) when employed with the greige good of Example 1.

The following examples are illustrative of the invention, but are not to be construed as to limiting the scope thereof in any manner.

Determination of Edge Curl

In these examples and comparative experiments, the edge curl test is conducted by wetting a 6.75 inch × 2.0 inch (17.1 cm × 5.1 cm), where the 6.75 inch (17.1 cm) cut is parallel to the tuft roll of the urethane backed carpet sample with water and positioning the wetted sample (backing down) on a flat surface. A weight heavy enough to hold one side of the carpet firmly down on the surface is placed on the first two inches of the sample opposite the end to be measured. The sample is left undisturbed for 30 minutes. After this time the extent of curl, or the distance from the flat surface to the back side of the outer edge of the carpet sample, is measured in centimeters.

Determination of Tuft Lock

The tuft lock test employed in the examples and comparative experiments was the Federal Test Method Standard DFL-22.

In this test, the carpet is cut into a 2 inch × 6 inch (5 cm × 15 cm) sample and bent around a 3/4 inch (19 mm) mandril with the tufts outward. The sample is mounted in the load sensing jaw of a tensile testing machine such as an Instron. A hook is placed in the traveling jaw of the instrument and one tuft is carefully hooked. The sample is pulled at the rate of 10 inches per minute (25 cm per minute) and the force necessary to pull the tuft out of the carpet is reported in pounds.

Measurements of the Viscosity of the Reacting Composition

The viscosity of the catalyzed composition is measured using a Brookfield LVF using a number 3 spindle rotating at 6 revolutions per minute. The time to reach 20,000 centipoise (20 Pascal-seconds) is noted for a particular composition.

Procedure for Preparing the Composition for Viscosity Measurement for Coating Carpet

To a one quart paper cup 100 grams of the desired polyol mixture is added. The desired amount of filler is mixed, using a high speed stirrer, into the polyol mixture. The appropriate amount of isocyanate is added and mixed similarly for an additional one minute and 30 seconds or until the temperature of the uncatalyzed composition is between 92°F and 94°F (33°C and 34°C). The appropriate amount of catalyst is added and mixed for an additional 30 seconds. The catalyzed composition is either doctored onto the back of the Executive Council carpeting within 45 seconds from the time of addition of the catalyst and cured for eight minutes at 120°C or is used in the test to measure the time from the addition of the catalyst until a viscosity of 20,000 centipoise (10 Pascal-seconds) is reached.

Determination of the Coating Weight

A 6.75 inch by 6.75 inch (17.1 cm by 17.1 cm) square is cut out of the carpet sample prepared by the above mentioned method. This sample is weighed to the nearest 0.1 gram. This weight minus the greige weight is referred to as the coating weight and normally is reported in oz/yd$^2$ (Kg/m$^2$).

In general, the tuft lock and edge curl performances are not only affected by the style of carpet, but by the amount of urethane coating which is on the back. Therefore, comparisons must be made on the same style of carpet and at similar coating weights within about 5.0 oz/yd$^2$ (0.17 Kg/m$^2$).

Determination of Penetration Weight

Three tuft rows or strands of fiber are removed from the above specimen. All the loose urethane is removed from the strands. The strands are weighed on an analytical balance and an average for the three strands is recorded. This weight minus the average weight for three strands taken from a 6.75 inch by 6.75 inch (17.1 cm by 17.1 cm) greige goods sample is determined. This weight is multiplied by the number of strands in the 6.75 inch by 6.75 inch (17.1 cm by 17.1 cm) greige sample to get the penetration weight on an oz/yd$^2$ (Kg/m$^2$) basis.

Examples 1 and 2 and Comparative Runs A and B

To a reactor was charged 90 grams of a liquid polyether polyol prepared by reacting glycerine with propylene oxide and then endcapping the polyol with an average of two moles of ethylene oxide per hydroxyl group. The polyether polyol has a molecular weight of 3000, a functionality of 3, and a hydroxyl equivalent weight of 1000. With the first polyol was mixed 10 grams of diethylene glycol, having a molecular weight of 106, a functionality of 2, and a hydroxy equivalent weight of 53. The ratio of the number of equivalents of hydroxyl groups of components (B):(A) is 2.1:1. To the polyol blend was mixed 27.65 grams of alumina trihydrate and 161.25 grams of calcium carbonate. To the polyol/filler mixture was blended 47.5 grams of an isocyanate prepolymer prepared by reacting an excess of an 80/20 mixture of 2,4/2,6-toluene diisocyanate with a polyether polyol which is the reaction product of glycerine reacted with propylene oxide in a molar ratio of 3 moles of propylene oxide per mole of glycerine. The isocyanate prepolymer had 30 percent by weight free isocyanate groups and an isocyanate equivalent weight of 140. The polyurethane forming composition had an NCO:OH ratio of 1.20:1. The filler/liquid reactant weight ratio was 128.1/100. To the reaction mixture was added varying amounts of a catalyst of 33 weight percent solution of triethylenediamine in dipropylene glycol. The time for the viscosity to reach 20,000 centipoise (20 Pascal-seconds) is reported in Table I.

Each reaction mixture was blended well and doctored onto the back of a commercial grade of carpet made of 4-ply Antron® brand nylon fibers weighing 27.0 oz/yd$^2$ (0.917 Kg/m$^2$) and tufted through a woven polypropylene primary backing at the rate of 8.0 stitches per inch (3.1 stitches per cm). The greige good was characterized by having a pile height of 0.156 inches (3.96 mm), a WDF of 164,000, and a griege weight of 31.0 oz/yd$^2$ (1.05 Kg/m$^2$). Each sample containing the urethane backing was cured at 120°C for 8 minutes. The coating weight, penetration weight, tuft lock and edge curl were determined for each example and comparative run and reported in Table I.

® Registered Trademark.

**0 049 452**

TABLE I

| | Example 1 | Example 2 | Comparative Run 1 | Comparative Run 2 |
|---|---|---|---|---|
| G catalyst | 0.15 | 0.33 | 0.60 | 1.00 |
| Time to 20,000 cps (20 Pas), sec | 170 | 120 | 60 | 51 |
| Coating weight, oz/yd$^2$ (Kg/m$^2$) | 35.5 (1.20) | 35.6 (1.21) | 37.1 (1.26) | 34.2 (1.16) |
| Penetration weight, oz/yd$^2$ (Kg/m$^2$) | 20.0 (0.68) | 16.9 (0.57) | 9.7 (0.33) | 6.4 (0.22) |
| Tuft lock, lbs (N) | 18.9 (84.1) | 17.6 (78.3) | 9.5 (42.3) | 9.5 (42.3) |
| Edge Curl, cm | 2.4 | 3.6 | 2.6 | 2.1 |

Examples 3 through 7

To a reactor was charged 85 grams of a liquid polyoxypropylene glycol having a molecular weight of 2000, an equivalent weight of 1000 and a hydroxyl functionality of 2. With the glycol was mixed 15 grams of dipropylene glycol having a molecular weight of 134, an equivalent weight of 67, and a hydroxyl functionality of 2. To the polyol blend was mixed 30 grams of alumina trihydrate and 175 grams of calcium carbonate. To the polyol/filler mixture was blended about 60 grams of a toluene diisocyanate prepolymer prepared by reacting 76.8 grams of 80/20 mixture of toluene diisocyanate with 14.7 grams of a liquid polyoxyethylene glycol having a molecular weight of 200, an equivalent weight of 100 and a hydroxyl functionality of 2, and 8.5 grams of a glycerine initiated polyether triol having a molecular weight of 260, an equivalent weight of 87 and a hydroxyl functionality of 3. The prepolymer had 26.8 percent by weight free isocyanate groups and an isocyanate equivalent weight of 156.7. The urethane forming composition had an NCO:OH ratio of 1.25:1. To each reaction mixture was added varying amounts of an organotin catalyst, commercially available from the Witco Chemical Company as Fomrez UL-28. The reaction mixture was blended well and doctored onto the back of a commercial grade of carpet described in Examples 1 and 2. Each sample containing the urethane backing was cured at 120°C for 8 minutes.

The coating weight was 35.0 ± 2.0 oz/yd$^2$ (1.19 ± 0.01 Kg/m$^2$) for each sample. The amount of catalyst, time to reach desired viscosity, penetration weight, tuft lock and edge curl for each example is reported in Table II.

TABLE II

| | Example 3 | Example 4 | Example 5 | Example 6 | Example 7 |
|---|---|---|---|---|---|
| G catalyst | 0.20 | 0.40 | 0.60 | 1.00 | 2.00 |
| Time to 20,000 cps (20 Pas), sec | 282.2 | 169.0 | 153.0 | 95.0 | 70.0 |
| Penetration weight, oz/yd$^2$ (Kg/m$^2$) | 21.3 (0.72) | 21.3 (0.72) | 17.7 (0.60) | 15.4 (0.52) | 13.2 (0.45) |
| Tuft Lock, lbs (N) | 23.6 (105) | 20.4 (90.7) | 20.1 (89.4) | 17.6 (78.3) | 14.4 (64.1) |
| Edge Curl, cm | 3.2 | 2.5 | 2.0 | 2.0 | 2.1 |

**Claims**

1. A polyurethane composition for providing a unitary backing for tufted or woven carpets which is a reaction product of a polyurethane forming mixture comprising:

6

(A) a relatively high molecular weight polyether polyol having an average of from 2 to 8 hydroxyl groups per molecule and an average hydroxyl equivalent weight of from 500 to 2200 or a mixture of such polyols;

(B) a relatively low molecular weight polyol having an average of from 2 to 8 hydroxyl groups per molecule and an average hydroxyl equivalent weight of from 31 to 230 or a mixture of such polyols;

(C) an organic polyisocyanate or polyisothiocyanate having an average from 2 to 4 NCX (each X being independently O or S) groups per molecule or a mixture of such isocyanates or isothiocyanates;

(D) an inorganic filler component; and

(E) a catalyst for reacting components (A) and (B) with component (C) characterized in that components (A), (B), (C), (D) and (E) are present in quantities such that the time required for the catalyzed, filled, unfrothed polyurethane forming mixture to reach a Brookfield viscosity of 20,000 centipoise (20 Pascal-seconds) is greater than 70 seconds measured from the time the catalyst is added to a mixture of the other four components, the catalyst being added when the temperature of the uncatalyzed mixture is between 92°F and 94°F (33°C and 34°C).

2. A carpet comprising a primary backing, a yarn tufted or woven through the primary backing thereby creating a yarn bundle on the underside of the resultant tufted or woven textile article, and a polyurethane composition applied to the underside thereby encapsulating the yarn bundles and adhering the yarn bundles to the primary backing characterized in that the polyurethane composition is the composition of Claim 1.

**Patentansprüche**

1. Polyurethanzusammensetzung zur Herstellung einer einheitlichen Rückenseitenbeschichtung für getuftete oder gewebte Teppiche, die ein Reaktionsprodukt einer ein Polyurethan bildenden Mischung ist, die enthält:

(A) ein relativ hochmoleculares Polyätherpolyol, das im Durchschnitt 2 bis 8 Hydroxylgruppen pro Molekül und ein durchschnittliches Hydroxyläquivalentgewicht von 500 bis 2200 besitzt, oder eine Mischung solcher Polyole;

(B) ein relativ niedrigmolekulares Polyol mit im Durchschnitt 2 bis 8 Hydroxylgruppen pro Molekül und einem durchschnittlichen Hydroxyläquivalentgewicht von 31 bis 230, oder eine Mischung solcher Polyole;

(C) ein organisches Polyisocyanat oder Polyisothiocyanat mit im Durchschnitt 2 bis 4 NCX-Gruppen (wobei jedes X unabhängig O oder S ist) pro Molekül oder eine Mischung solcher Isocyanate oder Isothiocyanate;

(D) eine anorganische Füllstoffkomponente; und

(E) einen Katalysator zur Reaktion der Komponenten (A) und (B) mit Komponente (C), dadurch gekennzeichnet, daß die Komponenten (A), (B), (C), (D) und (E) in solchen Mengen vorhanden sind, daß die zur Erreichung einer Brookfield-Viskosität von 20 000 cP (20 000 Pa-sek) erforderliche Zeit für die katalysierte, gefüllte, ungeschäumte polyurethanbildende Mischung größer als 70 sek ist, gemessen von der Zeit, bei der der Katalysator zu einer Mischung der anderen vier Komponenten zugegeben wird, wobei der Katalysator zugegeben wird, wenn die Temperatur der unkatalysierten Mischung zwischen 92°F und 94°F (33°C und 34°C) liegt.

2. Teppich, enthaltend eine primäre Unterlagsschicht, ein durch die primäre Unterlagsschicht getuftetes oder gewebtes Garn, wodurch ein Garnbündel an der Unterseite des resultierenden getufteten oder gewebten Textilartikels gebildet wird, und eine an der Unterseite applizierte Polyurethanzusammensetzung, wodurch die Garnbündel eingekapselt werden und die Garnbündel an die primäre Unterlagsschicht angeklebt werden, dadurch gekennzeichnet, daß die Polyurethanzusammensetzung die Zusammensetzung nach Anspruch 1 ist.

**Revendications**

1. Composition de polyuréthanne pour la réalisation d'un dossier unitaire de tapis tuffetés ou tissés qui est le produit de réaction d'un mélange formateur de polyuréthanne comprenant:

(A) un polyéther polyol de poids moléculaire relativement élevé comportant une moyenne de 2 à 8 groupes hydroxyle par molécule et un poids équivalent d'hydroxyle moyen de 500 à 2200 ou un mélange de tels polyols;

(B) un polyol de poids moléculaire relativement faible comportant une moyenne de 2 à 8 groupes hydroxyle par molécule et un poids équivalent d'hydroxyle moyen de 31 à 230 ou un mélange de tels polyols;

(C) un polyisocyanate ou polyisothiocyanate organique ayant une moyenne de 2 à 4 groupes NCX (chaque X étant indépendemment O ou S) par molécule ou un mélange de tels isocyanates ou isothiocyanates;

(D) un composant charge minérale; et

(E) un catalyseur pour réaliser la réaction des composants (A) et (B) avec le composant (C), caractérisée en ce que les composants (A), (B), (C), (D) et (E) sont présents en quantités telles que la durée nécessaire au mélange catalysé, chargé, non expansé, formateur de polyuréthanne pour atteindre une viscosité Brookfield de 20.000 centipoises (20 Pascals·secondes) soit supérieure à 70 secondes, mesurée à partir de l'instant où l'on ajoute le catalyseur à un mélange des quatre autres composants, le catalyseur étant ajouté lorsque la température du mélange non catalysé est comprise entre 33°C et 34°C (92°F et 94°F).

2. Tapis comportant un dossier primaire, un fil tuffeté ou tissé au travers du dossier primaire créant ainsi un paquet de fils sur l'envers de l'article textile tuffeté ou tissé résultant, et une composition de polyuréthanne appliquée sur l'envers, enrobant ainsi les paquets de fils et collant les paquets de fils au dossier primaire, caractérisé en ce que la composition de polyuréthanne est la composition de la revendication 1.